# EUROPEAN PATENT APPLICATION

(11) **EP 1 698 807 A1**
(43) Date of publication of application: **06.09.2006**
(21) Application number: 04793413.8
(22) Date of filing: 29.10.2004
(51) Int. Cl.: F16J 15/32, F16C 19/52

(54) **SEAL DEVICE WITH SENSOR AND ROLLING BEARING DEVICE USING THE SEAL DEVICE**

(30) Priority: 29.10.2003 JP 2003368348
(71) Applicant: JTEKT CORPORATION, Chuo-ku Osaka-shi Osaka 542-8502 (JP); Toyota Jidosha Kabushiki Kaisha, Toyota-shi, Aichi 471-8571 (JP); UCHIYAMA MANUFACTURING CORP., Okayama-shi, Okayama 702-8004 (JP)
(72) Inventor: KOYAGI, Katsura JTEKT Corporation, Osaka 5420082 (JP); INOUE, Masahiro JTEKT Corporation, Osaka 5420082 (JP); MURATA, Satoshi, Toyota-shi, Aichi 4718571 (JP); KIMURA, Masahiro, Kariya-shi, Aichi 4488650 (JP); IWASE, Eiichiro AISIN SEIKI KABUSHIKI KAISHA, Kariya-shi, Aichi 4488650 (JP); KAGEYAMA, Takeshi UCHIYAMA MANUFACTURING CORP., Okayama 7012221 (JP)
(74) Representative: Steinmeister, Helmut
(86) International application number: PCT/JP2004/016493
(87) International publication number: WO 2005/040648

(57) **Abstract**

A sensor-equipped seal device comprises a fixed-side seal member 8 and a rotation-side seal member 9. The fixed-side seal member 8 comprises a metal core 21, a resin member 22 joined to the metal core 21 by insert molding, and a sensor 11 attached to the metal core 21 with the molded resin member. The rotation-side seal member 9 has a slinger 31 fixedly fitted to a wheel-side raceway member 4, and a pulser 10 secured to the slinger 31. The metal core 21 of the fixed-side seal member 8 has a cylindrical portion 41 fixedly fitted to a body-side raceway member 3, and a flange 42 extending from an axially inner end of the cylindrical portion 41 toward the rotation-side seal member 9 so that no metal portion exists between the sensor 11 and the pulser 10.

## Description

### TECHNICAL FIELD

This invention relates to sensor-equipped seal devices and rolling bearing devices comprising the seal device.

### BACKGROUND ART

Since various items of data are required for controlling motor vehicles, it has been proposed to provide a sensor on a hub unit (rolling bearing device) comprising a wheel-side raceway member to which a wheel is to be attached, a body-side raceway member to be fixed to the vehicle body, and two rows of rolling bodies arranged between the two raceway members.

JP-A No. 5-26233 discloses a rolling bearing device of the type mentioned, which comprises an outer ring, an inner ring, rolling bodies arranged between the two rings, and a seal disposed between the ends of the two rings. A sensor support member provided with a sensor is attached to the end face of the outer ring. An annular magnet is secured to the axially outer side wall of a slinger fixed to the inner ring.

When the rolling bearing device of the type described is to be used for the hub units of motor vehicles, it is required that the axial dimension of the bearing device be limited to a predetermined value or smaller. The bearing device of the above publication has the problem that the device is difficult to use for hub units of motor vehicles because the annular magnet and the sensor support member project outward beyond the bearing device axially thereof.

Accordingly, it appears useful to attach the sensor to a metal core of the seal device by resin molding to thereby realize a diminished axial dimension, whereas it is then likely that water will ingress from between the molded resin and the metal core holding the resin molding. This problem must be obviated, while it is also a matter of concern that the metal core will exert an adverse effect on the accuracy of the detecting operation of the sensor.

An object of the present invention is to provide a sensor-equipped seal device wherein a sensor is attached to a metal core of the seal device by resin molding to thereby give a diminished axial dimension to the seal device while precluding the metal core from adversely affecting the accuracy of detecting operation of the sensor, and to also provide a rolling bearing device comprising the seal device to prevent water from ingressing into the bearing device and to give a diminished axial dimension to the bearing device.

### DISCLOSURE OF THE INVENTION

The present invention provides a sensor-equipped seal device comprising a fixed-side seal member having a metal core fixedly fitted to a fixed member and a sensor attached to the metal core by a molded resin, and a rotation-side seal member having a slinger fixedly fitted to a rotating member and a pulser secured to the slinger, the seal device being characterized in that the metal core of the fixed-side seal member has a cylindrical portion fixedly fitted to the fixed member, and a flange extending from an axially inner end of the cylindrical portion toward the rotation-side seal member so that no metal portion exists between the sensor and the pulser, the flange being provided with an elastic seal slidable in contact with the rotation-side seal member.

The fixed member is, for example, the outer ring or inner ring of a rolling bearing, and the rotating member is, for example, the inner ring or outer ring of the rolling bearing although these members are not limited to the rings.

The pulser has N poles and S poles which are arranged alternately for producing a rotation signal, and usually comprises an annular support and a magnetized body adhered thereto. The support comprises, for example, a large-diameter cylindrical portion, a small-diameter cylindrical portion and a connecting portion interconnecting the axially inner ends of these portions.

The elastic seal has an axial lip and/or a radial lip. The axial lip is slidable, for example, in contact with the pulser support. The radial lip is slidable, for example, in contact with the slinger. A lip support for supporting the lip portion of the elastic seal may be provided separately on the rotation-side seal member.

The sensor is, for example, a magnetic sensor although not limited thereto. The cylindrical portion of the rotation-side seal member is usually provided with the pulser as opposed to the magnetic sensor for giving a signal thereto.

The resin is joined to the metal core by insert molding. Preferably, the outer end of the core cylindrical portion is positioned within the resin by insert molding. Stated more specifically, the core, instead of being merely held in intimate contact with the surface of the resin, preferably has its outer end inserted into the resin. This eliminates the likelihood that the core will be removed from the resin, for example, owing to rotational torque.

The rotation-side seal member may be provided with a lip support comprising a cylinder fixedly fitted to the slinger and a flange integral with the cylinder and axially outwardly opposed to the pulser from an axially inward position for supporting a lip portion of the elastic seal. Instead of using the pulser support also as a portion for supporting the axial lip of the seal in bearing contact therewith, the provision of the specific member (lip support) eliminates the limitation on the position of bearing contact of the axial lip to produce an improved sealing effect.

The present invention also provides a rolling bearing device comprising a fixed ring, a rotatable ring, rolling bodies arranged between the two rings, a fixed-side seal member provided on at least one end of the fixed ring, and a rotation-side seal member provided on the rotatable ring so as to be opposed to the fixed-side seal member, the rolling bearing device being characterized in that the fixed-side seal member has a metal core fixedly fitted to the fixed ring and a sensor attached to the metal core by a molded resin, the rotation-side seal member having a slinger fixedly fitted to the rotatable ring and a pulser secured to the slinger, the metal core of the fixed-side seal member having a cylindrical portion fixedly fitted to the fixed ring and a flange extending from an axially inner end of the cylindrical portion toward the rotation-side seal member so that no metal portion exists between the sensor and the pulser, the flange being provided with an elastic seal slidable in contact with the rotation-side seal member.

The fixed ring may serve as an outer ring, and the rotatable ring as an inner ring.

With the rolling bearing device described, it is desired that the outer end of cylindrical portion of the metal core be positioned within the resin by insert molding for the same reason as described with reference to the sensor-equipped seal device. The rotation-side seal member may be provided with a lip support comprising a cylinder fixedly fitted to the slinger and a flange integral with the cylinder and axially outwardly opposed to the pulser from an axially inward position for supporting a lip portion of the elastic seal.

The fixed ring is a body-side raceway member having a portion to be attached to a vehicle body, and the rotatable ring serves as a wheel-side raceway member having a wheel attaching portion to render the bearing device suitable for use as a motor vehicle hub unit.

The sensor-equipped seal device of the present invention comprises a fixed-side seal member and a rotation-side seal member, the fixed-side seal member having a sensor joined to a metal core by resin molding, the rotation-side seal member having a pulser secured to a slinger. Accordingly, the sensor is incorporated in the seal device. For example when the sensor is to be attached to a rolling bearing, the sensor can therefore be incorporated into the rolling bearing easily, while the sensor-equipped bearing device can be made smaller in axial dimension. Further because the cylindrical portion of metal core of the fixed-side seal member is fixedly fitted to the fixed member, water can be prevented from ingressing into the bearing from between the fixed member and the fixed-side seal member. Further because the metal core flange is provided with an elastic seal slidably in contact with the rotation-side seal member, water can be prevented from ingressing into the bearing also from between the fixed-side seal member and the rotation-side seal member. Thus, water can be prevented from ingressing into the device provided with the sensor-equipped seal device. Moreover, the metal core flange is so formed that no metal portion thereof exists between the sensor and the pulser. This precludes the metal core from adversely affecting the accuracy of the detecting operation of the sensor.

With the rolling bearing device of the invention, the fixed-side seal member has a sensor joined to a metal core by resin molding, and the rotation-side seal member has a pulser secured to the slinger, so that the sensor is incorporated in the bearing device. The sensor is therefore easy to incorporate into the rolling bearing device, while the sensor-equipped bearing device can be diminished in axial dimension. Further since the cylindrical portion of metal core of the fixed-side seal member is fixedly fitted to the fixed ring, water is prevented from ingressing into the bearing from between the fixed ring and the fixed-side seal member. With the metal core flange provided with an elastic seal slidable in contact with the rotation-side seal member, water is prevented from ingressing into the bearing also from between the fixed-side seal member and the rotation-side seal member. Thus, the interior of the bearing is protected from the ingress of water. Moreover, the metal core flange is so formed that no metal portion thereof will exist between the sensor and the pulser, with the result that the metal core is precluded from exerting an adverse influence on the accuracy of the detecting operation of the sensor.

### BRIEF DESCRIPTION OF THE DRAWINGS

FIG. 1 is a view in vertical section of a first embodiment of the invention including a seal device and a rolling bearing device.
FIG. 2 is a left side elevation of the same.
FIG. 3 is an enlarged view in vertical section and showing the first embodiment of seal device of the invention.
FIG. 4 is an enlarged view in vertical section and showing a second embodiment of sensor-equipped seal device of the invention.

### BEST MODE OF CARRYING OUT THE INVENTION

Embodiments of the invention will be described below with reference to the drawings.

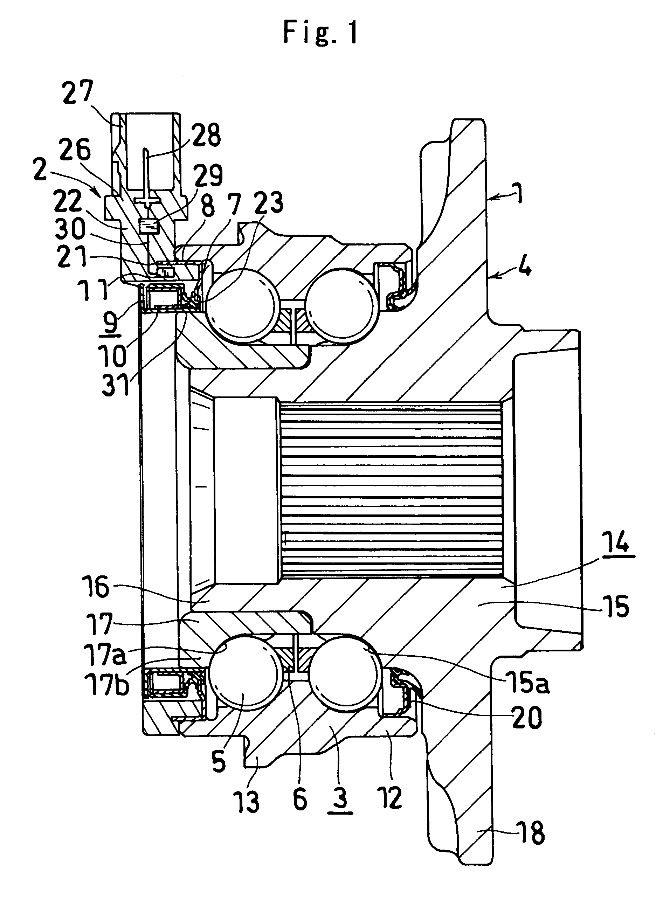

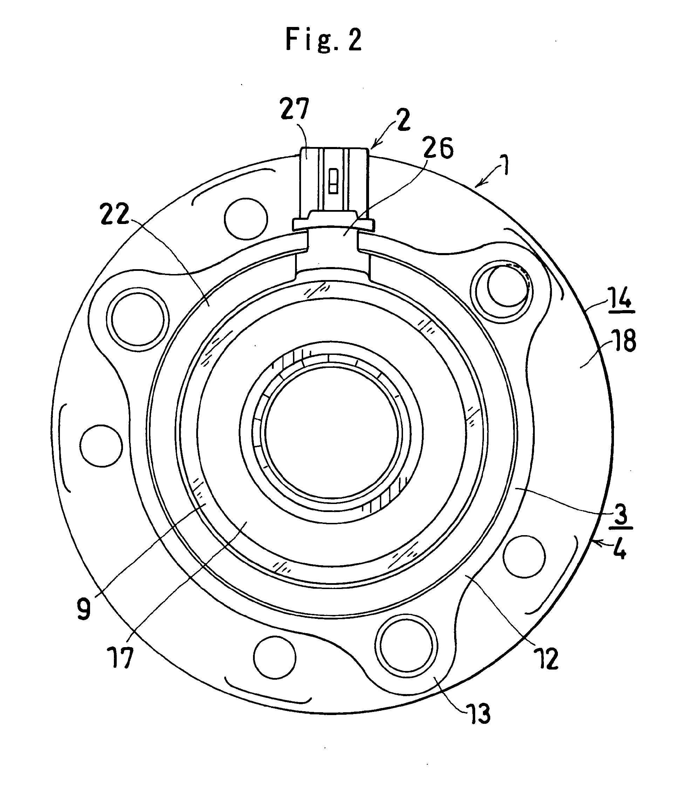

FIGS. 1 to 3 show a first embodiment of the invention including a sensor-equipped seal device and a rolling bearing device comprising the seal device. In the following description, the terms "left" and "right" refer respectively to the left- and right-hand sides of FIG. 1. The left side is the inside of a vehicle, and the right side is the outside of the vehicle.

The rolling bearing device has a hub unit 1, and a sensor device 2 and a pulser 10 which are provided on the unit, the pulser being the portion to be detected.

The hub unit 1 comprises a body-side raceway member 3 to be secured to the body of the vehicle, a wheel-side raceway member 4 for a wheel to be attached thereto, rolling bodies, i.e., balls 5, arranged in two rows between the two members 3, 4, and a retainer 6 for holding each row of balls 5.

The body-side raceway member 3 has the function of the outer ring (fixed ring) of a bearing, and has a cylindrical portion 12 provided in its inner periphery with two outer raceways, and a flange portion 13 provided closer to the left end of the cylindrical portion 12 and to be attached with bolts to a suspension (vehicle body).

The wheel-side raceway member 4 comprises a hollow shaft 14 having a large-diameter portion 15 provided with a first raceway 15a and a small-diameter portion 16 having an outside diameter smaller than the diameter of the first raceway 15a, and an inner ring 17 fitted around the small-diameter portion 16 of the hollow shaft 14 and having a right face in intimate contact with a left face of the large-diameter portion 15 of the hollow shaft 14. The hollow shaft 14 has an inner periphery provided with serrations. The hollow shaft 14 has close to its right end a flange portion 18 to be fixedly provided with a plurality of bolts for attaching the wheel thereto. A raceway 17a is formed in the inner ring 17 so as to be positioned in parallel to the raceway 15a of the hollow shaft 14. A shoulder portion 17b is provided at a left portion of the inner ring 17. A seal member 20 comprising an elastic seal and a metal core is provided between the right end of the body-side raceway member 3 and the hollow shaft 14.

The present invention provides a sensor-equipped seal device 7, which is disposed between the shoulder portion 17b of the inner ring 17 and the left end of the body-side raceway member 3.

The sensor-equipped seal device 7 comprises a fixed-side seal member 8 fixed to the body-side raceway member 3, and a rotation-side seal member 9 fixed to the wheel-side raceway member 4.

The fixed side seal member 8 comprises a metal core 21, a resin member 22 formed by insert molding as joined to the metal core 21, a sensor 11 attached to the metal core 21 by the molded resin, and an elastic seal 23 adhered to the core 21.

The resin member 22 is annular, and the annular portion is approximately equal to the left end portion of the fixed-side raceway member 3 in outside diameter. The annular portion is provided thereon with a projection 26 projecting leftward and radially outward. The projection 26 has a connector 27 integral with its upper end for providing a harness for connecting the sensor 11 to processing means on the vehicle body. The connector 27 has a connector pin 28 for signals. The sensor 11 is connected to the connector pin 28 by a junction 29 and a lead wire 30 (or by the lead wire only).

The rotation-side seal member 9 comprises a slinger 31 fixedly fitting to the shoulder portion 17b of the inner ring 17 of the wheel-side raceway member 4, and the above-mentioned pulser 10 which is secured to the slinger 31.

The sensor 11 is positioned within the resin member 22 formed on the inner periphery of a core cylindrical portion 41. The sensor device 2 comprises the sensor 11, wiring means including the connector 27, connector pin 28, junction 29 and lead wire 30 for delivering the output of the sensor 11 to the outside, and signal processing means (not shown). The sensor 11 is a magnetic sensor and has a sensing face radially opposed to the outer periphery of the pulser 10 from outside.

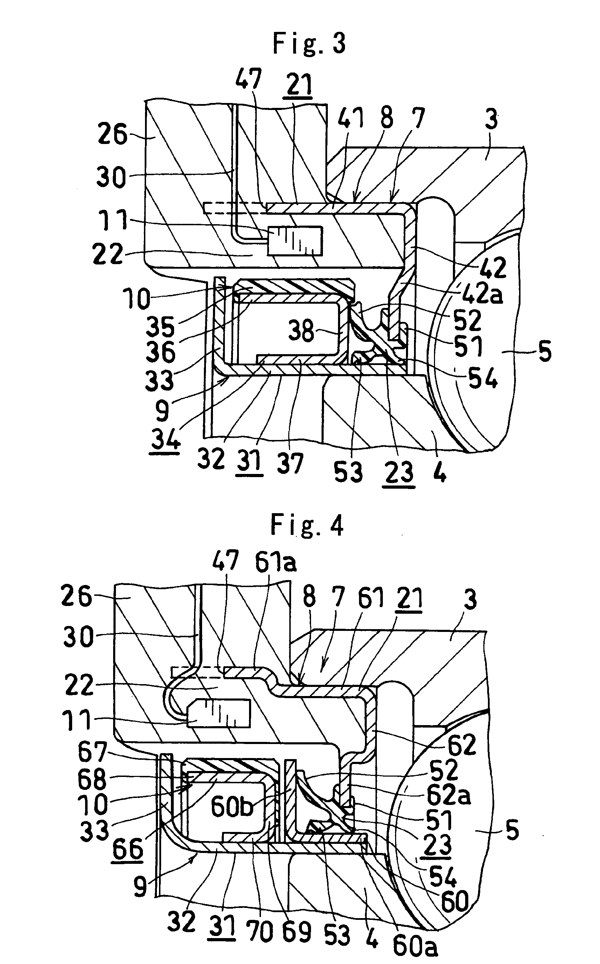

The sensor-equipped seal device 7 will be described below in greater detail with reference to FIG. 3.

The metal core 21 of the fixed-side seal member 8 comprises above-mentioned cylindrical portion 41 fixedly fitted to the inner periphery of the left end portion of the body-side raceway member 3, and an inward flange 42 extending from the axially inner end (right end) of the cylindrical portion 41 toward the rotation-side seal member 9. The inward flange 42 has an inner peripheral edge portion 42a slightly bent axially outward. The elastic seal 23 is adhered to the inner peripheral edge portion 42a of the inward flange 42. The cylindrical portion 41 has a left end projecting leftward beyond the left end of the body-side raceway member 3 into the resin member 22.

The slinger 31 comprises a cylindrical portion 32 fixedly fitting around the shoulder portion 17b of the inner ring 17 of the wheel-side raceway member 4, and an outward flange 33 extending from the axially outer end (left end) of the cylindrical portion 32 toward the fixed-side seal member 8.

The pulser 10 has N poles and S poles which are arranged alternately for producing a rotation signal, and comprises an annular support 34 and a magnetized body 35 adhered to the support 34. The support 34 is made of a magnetic metal such as SUS430. The magnetized body 35 is made from a mixture of a rubber serving as a binder and a magnetic powder by magnetizing the mixture.

The cylindrical portion 41 of the metal core 21 of the fixed-side seal member 8 is provided in its outer end with a generally rectangular cutout 47 for passing therethrough the wiring 30 for connecting the sensor 11 to the signal processing means.

The support 34 of the pulser 10 comprises a large-diameter cylindrical portion 36, a small-diameter cylindrical portion 37 and a connecting portion 38 for interconnecting the axially inner ends (right ends) of these portions 36, 37. The small-diameter portion 37 is provided around the cylindrical portion 32 of the slinger 31 by a press fit. The pulser support 34 is smaller than the slinger cylindrical portion 32 in axial length. The pulser support 34 and the slinger 31 are so positioned that the metal core flange 42 is positioned at the right of the pulser support 34, with the elastic seal 23 positioned around a right portion of the slinger cylindrical portion 32. The left end of the large-diameter cylindrical portion 36 is so positioned as to be opposed to the right face of the slinger flange 33, with the left edge of the magnetized body 35 provided therebetween. The left end of the small-diameter cylindrical portion 37 is positioned axially inwardly (rightwardly) of the left end of the large-diameter cylindrical portion 36. The magnetized body 35 is adhered to the outer periphery of the large-diameter cylindrical portion 36. The magnetized body 35 has at its left edge a bent portion adhered to the left end of the large-diameter cylindrical portion 36, and at its right edge a bent portion adhered to the right face of the connecting portion 38. The magnetized body 35 is separated from the inner periphery of the resin member 22 by a gap, which has the smallest possible value insofar as the contact therebetween is avoidable.

Thus, the pulser support 34 and the slinger 31 are so positioned that the metal core flange 42 is located at the right of the pulser 10, namely that no metal portion of the metal core flange 42 is located between the sensor 11 and the pulser 10. This arrangement prevents the metal core 21 from adversely affecting the accuracy of detecting operation of the sensor 11 and also serves to reduce the distance of the pulser 10 from the sensor 11, consequently assuring the sensor 11 of the accuracy of detecting operation thereof.

The elastic seal 23 of the fixed-side seal member 8 has a U-shaped fitting portion 51 fitting to the inner peripheral edge portion 42a of the inward flange 42 of the core 21, an axial lip 52 extending leftward from the left side of the fitting portion 51 and slidable in contact with the right face of the connecting portion 38 of the pulser support 34, a first radial lip 53 extending from the bottom of the fitting portion 51 leftward and radially inward and slidable in contact with the cylindrical portion 32 of the slinger 31, and a second radial lip 54 extending from the bottom of the fitting portion 51 radially inward and slidable in contact with the slinger cylindrical portion 32. The interior of the bearing is sealed off by the elastic seal 23 as positioned between the pulser 10 and the interior of the bearing.

The rotation-side seal member 9 does not have any elastic seal serving as a contact seal. Provided externally of the pulser 10 as a seal is a labyrinth seal between the outer peripheral edge portion of the outward flange 33 of the slinger 31 and the resin member 22.

The metal core 21 of the fixed-side seal member 8 is joined to the resin member 22 thereof by insert molding, such that the left part of the metal core cylindrical portion 41 is held inserted into the resin member 22 by insert molding, whereby the metal core 21 and the resin member 22 are prevented from slipping relative to each other. Furthermore, the cylindrical portion 41 of core 21 of the fixed-side seal member 8 is fixedly fitted in the body-side raceway member 3, so that the core 21 is unlikely to slip relative to the raceway member 3 owing to the torque of sliding movement of the elastic seal 23. The water flowing in from outside is blocked by the fitting engagement of the core cylindrical portion 41 with the body-side raceway member 3 and prevented from moving rightward into the interior of the bearing.

FIG. 4 shows a second embodiment of the invention including a sensor-equipped seal device and a rolling bearing device comprising the seal device. The sensor-equipped seal device shown in FIG. 4 is usable in place of the seal device shown in FIG. 1, and is shown only in FIG. 4 which corresponds to FIG. 3. A drawing corresponding to FIG. 1 is omitted. Throughout FIGS. 1, 3 and 4, like parts are designated by like reference numerals and will not be described repeatedly.

The rotation-side seal member 9 of this embodiment has a slinger 31, the right portion of which is provided with a lip support 60 for supporting lips 52, 53, 54 of an elastic seal 23 of the fixed-side seal member 8.

The fixed-side seal member 8 includes a metal core 21, which comprises a cylindrical portion 61 fixedly fitted in the left end of the body-side raceway member 3, and an inward flange 62 extending from the axially inner end (right end) of the cylindrical portion 61 toward the rotation-side seal member 9. The flange 62 has an axially outwardly (leftwardly) bent inner peripheral edge portion 62a having the elastic seal 23 adhered thereto. The cylindrical portion 61 has a left part 61a projecting leftward beyond the left end of the body-side raceway member 3, slightly bent radially outward and inserted in a resin member 22 of the seal member 8.

The pulser 10 of this embodiment has N poles and S poles which are arranged alternately for producing a rotation signal, and comprises an annular support 66 and a magnetized body 67 adhered to the support 66. The magnetized body 67 is made from a mixture of a rubber serving as a binder and a magnetic powder by magnetizing the mixture.

The support 66 of the pulser 10 comprises a large-diameter cylindrical portion 68, a small-diameter cylindrical portion 70 and a connecting portion 69 for interconnecting the axially inner ends (right ends) of these portions 68, 70. The pulser support 66 has an axial length slightly larger than half of the axial length of the slinger cylindrical portion 32. The small-diameter portion 70 is provided around a left part of the cylindrical portion 32 of the slinger 31 by a press fit. The left end of the large-diameter cylindrical portion 68 is so positioned as to be opposed to the right face of the slinger flange 33, with the left edge of the magnetized body 67 provided therebetween. The left end of the small-diameter cylindrical portion 70 is positioned axially inwardly (rightwardly) of the left end of the large-diameter cylindrical portion 68. The magnetized body 67 is adhered to the outer periphery of the large-diameter cylindrical portion 68. The magnetized body 67 has at its left edge a bent portion adhered to the left end of the large-diameter cylindrical portion 68, and at its right edge a bent portion adhered to the right face of the connecting portion 69. The magnetized body 67 is separated from the inner periphery of the resin member 22 by a gap, which has the smallest possible value insofar as the contact therebetween is avoidable.

The lip support 60 comprises a cylindrical portion 60a, and an outward flange 60b formed at the left end of the cylindrical portion. The lip support 60 has an axial length which is slightly smaller than half of the axial length of the cylindrical portion 32 of the slinger 31. The cylindrical portion 60a is provided around the right part of slinger cylindrical portion 32 by a press fit. The axial lip 52 of the elastic seal 23 is slidably in contact with the right face of the outward flange 60b of the lip support 60, and the first and second radial lips 53, 54 are slidably in contact with the outer periphery of the lip support cylindrical portion 60a, whereby a labyrinth seal is provided at the right side of the pulser 10 in addition to one provided at the left side thereof.

According to the second embodiment, the portion on which the axial lip 52 bears is not provided by the support 34 of the pulser 10 unlike the first embodiment, but the lip support 60 is used specifically for supporting the axial lip 52, so that the position of the bearing contact of the axial lip 52 can be determined without being limited by the shape of the pulser support 66. This produces an improved sealing effect. Since the axial lip 52 bears on the inner face of the lip support 60, the axial lip 52 is unlikely to become damaged with flaws created on the right face (outer surface) of the pulser support 66 when the pulser 10 is forcibly fitted around the slinger as by a press fit.

The metal core 21 of the fixed-side seal member 8 is joined to the resin member 22 thereof by insert molding, with the left part of cylindrical portion 61 of the core 21 inserted in the resin member 22, whereby the core 21 and the resin member 22 are prevented from slipping relative to each other. In molding the resin member 22, not only the left part 61a of the cylindrical portion 61 which part is slightly bent radially outward but also the stepped part of this portion 61 is inserted into the resin member 22, whereby the core 21 and the resin member 22 are restrained from slipping relative each other more effectively. Furthermore, the cylindrical portion 61 of core 21 of the fixed-side seal member 8 is fixedly fitted in the body-side raceway member 3, so that the core 21 is unlikely to slip relative to the raceway member 3 owing to the torque of sliding movement of the elastic seal 23. The water flowing in from outside is blocked by the fitting engagement of the core cylindrical portion 61 with the body-side raceway member 3 and prevented from moving rightward into the interior of the bearing.

With the second embodiment as in the first, the pulser support 66 and the slinger 31 are so positioned that the metal core flange 62 is located at the right of the pulser 10, namely that no metal portion of the metal core flange 62 is located between the sensor 11 and the pulser 10. This arrangement prevents the metal core 21 from adversely affecting the accuracy of detecting operation of the sensor 11 and also serves to reduce the distance of the pulser 10 from the sensor 11, consequently assuring the sensor 11 of the accuracy of detecting operation thereof.

Although the hub unit 1 of each of the foregoing embodiments has a hollow shaft 14 provided with serrations so that the shaft portion of a constant velocity joint can be inserted in for use with a drive shaft, the hollow shaft is of course replaceable by the rotating shaft of a driven wheel to make the unit usable for the drive wheel. Further although the invention has been described with reference to the hub unit 1, the foregoing sensor-equipped seal device 7 is usable for various rolling bearing devices other than the hub unit 1 or for various rotating devices for effecting relative rotation.

### INDUSTRIAL APPLICABILITY

The invention provides a sensor-equipped seal device wherein a sensor is attached to a metal core of the seal device by resin molding, with the metal core prevented from adversely affecting the accuracy of the detecting operation of the sensor, and also provides a rolling bearing device comprising the seal device to prevent water from ingressing into the bearing device. The seal device and bearing device are diminished in axial dimension. The bearing device is readily usable as hub units for motor vehicles.

## Claims

1. A sensor-equipped seal device comprising a fixed-side seal member having a metal core fixedly fitted to a fixed member and a sensor attached to the metal core by a molded resin, and a rotation-side seal member having a slinger fixedly fitted to a rotating member and a pulser secured to the slinger, the seal device being **characterized in that** the metal core of the fixed-side seal member has a cylindrical portion fixedly fitted to the fixed member, and a flange extending from an axially inner end of the cylindrical portion toward the rotation-side seal member so that no metal portion exists between the sensor and the pulser, the flange being provided with an elastic seal slidable in contact with the rotation-side seal member.

2. A sensor-equipped seal device according to claim 1 wherein the metal core of the fixed-side seal member is provided by insert molding so that an outer end of the cylindrical portion is positioned within the resin.

3. A sensor-equipped seal device according to claim 1 or 2 wherein the rotation-side seal member is provided with a lip support comprising a cylinder fixedly fitted to the slinger and a flange integral with the cylinder and axially outwardly opposed to the pulser from an axially inward position for supporting a lip portion of the elastic seal.

4. A rolling bearing device comprising a fixed ring, a rotatable ring, rolling bodies arranged between the two rings, a fixed-side seal member provided on at least one end of the fixed ring, and a rotation-side seal member provided on the rotatable ring so as to be opposed to the fixed-side seal member, the rolling bearing device being **characterized in that** the fixed-side seal member has a metal core fixedly fitted to the fixed ring and a sensor attached to the metal core by a molded resin, the rotation-side seal member having a slinger fixedly fitted to the rotatable ring and a pulser secured to the slinger, the metal core of the fixed-side seal member having a cylindrical portion fixedly fitted to the fixed ring and a flange extending from an axially inner end of the cylindrical portion toward the rotation-side seal member so that no metal portion exists between the sensor and the pulser, the flange being provided with an elastic seal slidable in contact with the rotation-side seal member.

5. A rolling bearing device according to claim 4 wherein the metal core of the fixed-side seal member is provided by insert molding so that an outer end of the cylindrical portion is positioned within the resin.

6. A rolling bearing device according to claim 4 or 5 wherein the rotation-side seal member is provided with a lip support comprising a cylinder fixedly fitted to the slinger and a flange integral with the cylinder and axially outwardly opposed to the pulser from an axially inward position for supporting a lip portion of the elastic seal.

7. A rolling bearing device according to any one of claims 4 to 6 which is **characterized in that** the fixed ring is a body-side raceway member having a portion to be attached to a vehicle body, the rotatable ring serving as a wheel-side raceway member having a wheel attaching portion, the bearing device being usable as a motor vehicle hub unit.
